# EUROPÄISCHE PATENTSCHRIFT

(11) **EP 0 991 165 B1**
(45) Veröffentlichungstag und Bekanntmachung des Hinweises auf die Patenterteilung: **12.05.2004**
(21) Anmeldenummer: 99126044.9
(22) Anmeldetag: 03.07.1998
(51) Int. Cl.: H02K 15/04

(54) **Vorrichtung zur Herstellung von Spulen bzw. Spulengruppen für Elektromotoren, Generatoren oder dergleichen**
Device for producing coils or coil groups for electric motors, generators or similar
Dispositif pour la production de bobines ou de groupes de bobines pour moteurs électriques, générateurs ou autres

(30) Priorität: 07.07.1997 DE 19728943
(43) Veröffentlichungstag der Anmeldung: 05.04.2000
(62) Teilanmeldung aus: 98944967.3
(73) Patentinhaber: Rist, Otto, 88255 Baienfurt (DE)
(72) Erfinder: Rist, Otto, 88255 Baienfurt (DE); Wessle, Anton, 88284 Mochenwangen (DE)
(74) Vertreter: Patentanwälte Eisele, Otten, Roth & Dobler

(56) Entgegenhaltungen:
- EP-A- 0 535 303
- DE-A- 4 403 919
- US-A- 4 000 764
- US-A- 4 723 354

## Beschreibung

Die Erfindung betrifft eine Vorrichtung zur Herstellung von Spulen bzw. Spulengruppen für Elektromotoren oder dergleichen, insbesondere zum Wickeln von Spulen vor dem Einziehen in ein genutetes Statorpaket, nach dem Oberbegriff des Anspruchs 1. Eine Vorrichtung dieser Art ist in DE-A-4 103 919 beschrieben.

Insbesondere beim Wickeln von Spulen vor dem Einziehen in ein entsprechend genutetes Statorpaket für einen Elektromotor, Generator usw. werden bereits mehrstufige Wickelschablonen verwendet, die'wenigstens zwei Stufen mit unterschiedlich großem Umfang aufweisen. Diese Wickelschablonen werden an einen sogenannten Einziehkopf angefügt, woraufhin die gewünschten Spulen um die Wickelschablone herum gewickelt werden. Derartige Wickelschablonen bzw. die zugehörigen Vorrichtungen zum Herstellen der Spulen werden beispielsweise in der DE 28 08 048 oder auch in der DE 33 48 055 beschrieben.

Bei fertig gewickelten Spulen und somit auch im Stator mit eingezogenen Spulen ergeben sich lange Anschlussstücke, die, wenn überhaupt, nur schwer der jeweiligen Spule zuzuordnen und in der Handhabung bei der weiteren Bearbeitung des Stators hinderlich sind. Diese Schwierigkeiten treten vor allem bei Spulen mit parallel gewickelten Drähten auf, die dann gefertigt werden, wenn ein Leiterquerschnitt vorzusehen ist, der aus fertigungstechnischen Gründen mit einem einzelnen, entsprechend dicken Draht nicht zu realisieren ist. Bislang werden in der Statorfertigung daher die Anschlussstücke der Spulen von Hand einander zugeordnet und zu einem Knäuel oder zu einer Rolle aufgedreht, um die Handhabung des Stators zu verbessern. Die manuelle Zuordnung und Wicklung der Anschlussstücke zu einem Knäuel ist sehr zeit- und damit kostenaufwendig.

Aufgabe der Erfindung ist es daher, den oben angeführten Aufwand in der Fertigung zu reduzieren.

Diese Aufgabe wird durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Erfindungsgemäß wird daher bei einer Vorrichtung zur Herstellung von Spulen bzw. Spulengruppen gemäß dem Oberbegriff des Anspruchs 1 eine Klemmvorrichtung vorgesehen, die einen drehbaren Wickelkopf aufweist.

Durch Drehen dieses Wickelkopfs kann das Aufdrehen der Anschlussstücke einer zu wickelnden oder gewickelten Spule bewerkstelligt werden. Durch eine derartige Klemmvorrichtung mit drehbarem Wickelkopf ergibt sich die Möglichkeit einer weitestgehend automatischen Fertigung.

Diese Klemmvorrichtung wird vorzugsweise so ausgebildet, dass sie in einem besonderen Betriebszustand den Spulendraht nicht festklemmt, sondern lediglich führt. Somit kann nach dem Wickeln einer Spule durch einen sogenannten Flyer durch Verfahren dieser Klemmeinheit ein Stück Spulendraht in der gewünschten Länge von der Vorratsspule abgezogen werden. Die Arbeitsweise der Klemmvorrichtung ähnelt in diesem Betriebszustand der Funktionsweise des Flyers, der üblicherweise zum Wickeln der Spulen verwendet wird, d. h. der Spulendraht läuft in diesem Fall während des Verfahrens der Klemmvorrichtung gleitend durch diese hindurch.

Vorteilhafterweise wird ein Schneidmesser in die Klemmeinheit mit Wickelkopf integriert. Auf diese Weise kann ein Anschlussende einer Spule mit der gleichen Vorrichtung gleitend geführt, haltend verklemmt, geschnitten und aufgerollt werden.

Vorteilhafterweise wird die Klemmeinheit mit Wickelkopf in wenigstens einer Richtung verfahrbar ausgebildet. Dies ermöglicht die beschriebene Bearbeitung, d. h. das Aufwickeln eines Anschlussstücks bei einem Spulenende oder Spulenanfang, ohne die Spule bzw. den Einziehkopf, der die Spule trägt, oder die Wickelschablone zu verfahren. Während des Aufwickelns des Anschlussstücks fährt in diesem Fall die Klemmeinheit mit Wickelkopf die entsprechende Länge, um die das Anschlussstück durch das Aufwickeln verkürzt wird, in Richtung auf die Wickelschablone oder die fertig gewickelte Spule zu.

In einer vorteilhaften Ausführungsform der Erfindung wird eine zweite Klemmeinheit vorgesehen, um das Ende des Spulendrahts, der von einer Vorratsspule zugeführt wird, zu halten, während die vorbeschriebene Klemmeinheit mit Wickelkopf das Anschlussende einer zuvor gewickelten Spule bearbeitet.

Ein Ausführungsbeispiel der Erfindung wird in der Zeichnung dargestellt und anhand der Figuren nachfolgend näher erläutert.

Im Einzelnen zeigen
- Fig. 1: eine Draufsicht auf eine Klemmeinheit mit Wickelkopf zur Bearbeitung eines Spulenanschlußstücks,
- Fig. 2: eine Seitenansicht einer Klemmeinheit mit Wickelkopf und
- Fig. 3: eine Draufsicht auf eine Klemmeinheit gemäß Fig. 2.

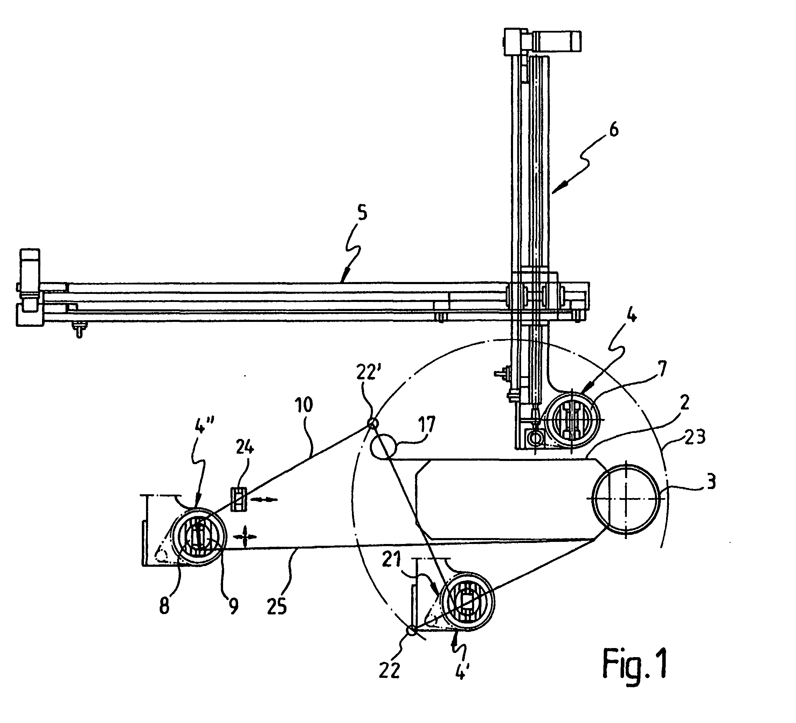

Die Vorrichtung 1 in der Draufsicht gemäß Fig. 1 zeigt eine fertige Teilspule 2, die in den Einziehkopf 3 eingelegt ist. Eine Klemmeinheit 4 ist mit zwei Linearvorschüben 5, 6 in einer Ebene verschiebbar. Bei Bedarf kann auch ein dritter, nicht näher dargestellter Linearvorschub vorgesehen werden, um die Klemmeinheit 4 zusätzlich in vertikaler Richtung zu verfahren.

Die Klemmeinheit 4 kann auch auf andere Weise verfahrbar ausgebildet sein. So kann beispielsweise ein Schwenkmechanismus für eine Vorschubeinheit vorgesehen werden, um die Klemmeinheit in einer Ebene zu positionieren.

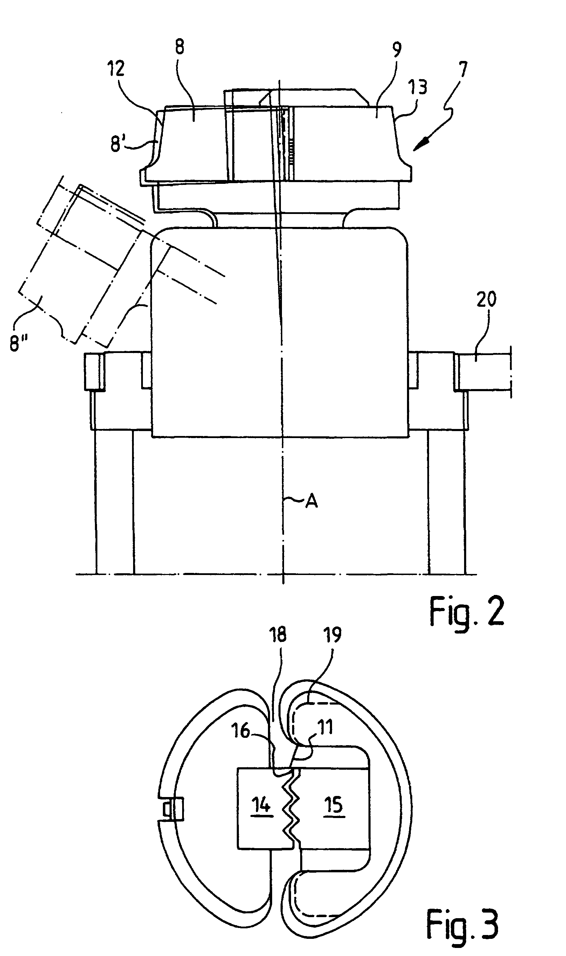

Die Klemmeinheit 4 (s. Fig. 2 und 3) verfügt über einen Wickelkopf 7. Am Wickelkopf 7 sind zwei Klemmbacken 8, 9 zur Halterung des Spulendrahts 10 vorgesehen. Ein Schneidwerkzeug 11 ist ebenfalls in die Klemmeinheit 4 integriert.

Die beiden Klemmbacken 8, 9 weisen jeweils eine Wickelfläche 12, 13 auf, an denen bei einer Drehung um die Achse A des Wickelkopfs 7 ein Anschlussstück einer Spule 2 gewickelt wird.

Auf den jeweils einander zugewandten Seiten der Klemmbacken 8, 9 sind im Innern zwei gegenseitig verzahnte Klemmklötze 14, 15 befestigt, zwischen denen ein Spulendraht 10 beim Aneinanderdrücken der beiden Klemmblöcke 14, 15 fixiert ist.

Das Schneidmesser 11 ist an einem Klemmklotz 15 befestigt und schneidet in Wechselwirkung mit einer Scherkante 16 des anderen Klemmklotzes 14 beim Zusammendrücken einen dazwischen liegenden Spulendraht 10.

In Fig. 2 ist anhand dreier verschiedener Positionen 8, 8', 8'' dargestellt, wie der Wickelkopf 7 unterschiedliche Funktionen wahrnehmen kann. Hierbei vollzieht der andere Klemmbacken 9 eine analoge Bewegung, wie nachfolgend für den Klemmbacken 8 beschrieben.

In der ganz zusammengedrückten Position 8 wird mit Hilfe des Schneidmessers 11 und der Scherkante 16 ein dazwischen befindlicher Draht geschnitten. In der leicht weggeschwenkten Position 8' wird ein Draht 2 von den Klemmklötzen 14, 15 haltend festgeklemmt. In der öffnenden Bewegung bis hin zur Position 8'' wird eine aufgewickelte Rolle 17 eines Anschlussstücks abgeworfen. Hierzu sind die nach außen weisenden Wickelflächen 12, 13 nach oben hin verjüngend ausgebildet. Hierdurch wird beim Auseinanderklappen der Klemmbacken 8, 9 ein aufgewickeltes Anschlussstück 17 abgeworfen. In einer Zwischenposition zwischen den Positionen 8' und 8'' wird der Draht locker gleitend zwischen den Klemmbacken 8, 9 geführt.

Zur Vermeidung, dass bereits während des Aufrollens eines Anschlussstücks 17 der Draht von den Wickelflächen 12, 13 herabgleitet, ist im Bereich des Zwischenspalts 18 zwischen den Klemmbacken 8, 9 an wenigstens einem der beiden Klemmbacken 8, 9 eine Hinterschleifung 19 in die Wickelflächen 12, 13 eingeschliffen, wie in Fig. 3 mit gestrichelten Linien angedeutet. In dieser Hinterschleifung 19 wird beim Aufwickeln eines Drahts dieser Draht auf den Wickelflächen 12, 13 gehalten. Beim Auseinanderklappen der beiden Klemmbacken 8, 9 des Wickelkopfs 7 wird das aufgewickelte Anschlussstück 17 nach oben hin durch die außenseitige konische Form der Wickelflächen 12, 13 gedrängt, wobei die Rolle des Anschlussstücks 17 durch die Umfangsverjüngung der Klemmbacken 8, 9 das nötige Spiel erhält, um aus der Hinterschleifung 19 herauszugleiten.

Diese Art des Wickelkopfs 7 ist besonders vorteilhaft, da durch eine einzige Bewegungsvorrichtung, die das Auseinanderklappen der Klemmbacken 8, 9, vorzugsweise in Folge einer Hubbewegung eines nicht näher dargestellten Antriebs, verursacht, der Draht zum einen geschnitten (Position 8), haltend festgeklemmt (Position 8'), gleitend geführt (nicht dargestellte Zwischenposition zwischen den Positionen 8' und 8'') sowie abgeworfen werden kann (Übergang zur Position 8'').

Die Drehbewegung des Wickelkopfs 7 wird vorzugsweise über einen Zahnriemenantrieb 20 durchgeführt, dessen Zahnriemen 21 in Fig. 1 angedeutet ist.

Die Klemmeinheit 4 ist in Fig. 1 in drei verschiedenen Positionen 4, 4', 4'' dargestellt. Eine schematisch angedeutete Führungseinheit (ein sogenannter Flyer) 22 bzw. 22' ist in zwei verschiedenen Positionen entlang seiner Umlaufbahn 23 eingezeichnet.

Das Anfangsanschlussstück 17 der Spule 2 ist bereits zu einer in der Zeichnung angedeuteten Rolle aufgerollt.

Eine weitere Klemmeinheit 24 zum Halten eines Drahtendes ist auf nicht näher dargestellte Weise ebenfalls in einer oder mehrere Richtungen verfahrbar. Auch die Klemmeinheit 24 kann bei Bedarf ein Schneidmesser zum Schneiden des Spulendrahts 10 aufweisen.

Nach Fertigstellung der Spule 2 nimmt die Klemmeinheit 4 in der Stellung 4', während sich der Flyer 22 in der Position 22 befindet, den Spulendraht 10 auf und umschließt den Draht locker. Anschließend verfährt sie in ihre Position 4'', wobei der Spulendraht 10 durch die Klemmeinheit 4 gleitend durchläuft und aufgrund der nun eingenommenen Position 22'' des Flyers sowie gegebenenfalls durch eine entsprechende Verschiebung der Klemmeinheit 24 in der Klemmeinheit 24 zu liegen kommt.

Das Ende des Spulendrahts kann nun zwischen den beiden Klemmeinheiten 4, 24 geschnitten werden, wobei es unerheblich ist, wo die Schneidvorrichtung genau angeordnet ist. Sofern das Schneidmesser 11 wie in der Ausführung gemäß Fig. 2 und Fig. 3 im Wickelkopf 7 angeordnet ist, empfiehlt es sich zur Vermeidung von Abfallstücken, den Wickelkopf beim Schneiden so zu drehen, dass das Schneidmesser zur haltenden Klemmeinheit 24 hin gewandt ist.

Die Klemmeinheit 24 hält das Drahtende des Drahts 10, der von einer Vorratsspule oder Vorratstrommel über den Flyer 22 zugeführt wird, während die Klemmeinheit 4 das Endanschlussstück 25 der fertiggestellten Spule 2 verklemmt und hält. Durch Drehen des Wickelkopfs 7 und gleichzeitiges Heranfahren der Klemmeinheit 4 in die Nähe der Spule 2 kann nun das Endanschlussstück 25 entsprechend dem Anfangsanschlussstück 17 aufgerollt werden. Anschließend wird die Klemmeinheit 4 geöffnet und das aufgerollte Endanschlussstück 25 abgeworfen.

Die Klemmeinheit 4 holt sich sodann das neue, von der Klemmeinheit 24 gehaltene Anfangsstück des Spulendrahts 10, um es wiederum als Anfangsanschlussstück 17 aufzurollen. Zum Abholen des von der Klemmeinheit 24 gehaltenen Anfangsstücks wird die Klemmeinheit 4 bzw. deren Wickelkopf 7 so gedreht, dass das Schneidmesser 11 von der Klemmeinheit 24 abgewandt liegt, d. h. in einer gegenüber der Schneidstellung um 180° Grad gedrehten Stellung. Hierdurch wird, wie oben angeführt vermieden, daß kleine Zwischenstücke des Spulendrahts 10 als Abfall anfallen. Sobald die in der Fertigung zeitlich darauffolgende Spule 2 mit ein paar Windungen gewickelt ist, kann das Anfangsanschlussstück 17 von der Klemmeinheit 4 abgeworfen werden, ohne dass es in die Spule 2 eingezogen wird. Der beschriebene Ablauf kann nunmehr von vorne beginnend ablaufen.

Durch die aufgerollten Anschlussstücke 17 bzw. 25 ist der noch nicht ganz fertige Stator nach dem Einziehen der Spulen 2 in das nicht näher dargestelltes Statorpaket bei den weiteren Fertigungsschritten leichter handzuhaben. Insbesondere bei Verwendung mehrerer paralleler Spulendrähte sind zudem die zueinander gehörenden Anschlussdrähte durch das gemeinsame Aufrollen in einem Anschlussstück 17, 25 unmittelbar einander zugeordnet. Bei komplizierten Statorwicklungen wäre die Zuordnung lose herabhängender Anschlussstücke 17, 25 schwierig wenn nicht gar unmöglich.

### Bezugszeichenliste:

- 1: Vorrichtung
- 2: Spule
- 3: Einziehkopf
- 4: Klemmeinheit
- 5: Linearvorschub
- 6: Linearvorschub
- 7: Wickelkopf
- 8: Klemmbacken
- 9: Klemmbacken
- 10: Spulendraht
- 11: Schneidmesser
- 12: Wickelfläche
- 13: Wickelfläche
- 14: Klemmklotz
- 15: Klemmklotz
- 16: Scherkante
- 17: Anschlussstück
- 18: Zwischenspalt
- 19: Hinterschleifung
- 20: Zahnriemenantrieb
- 21: Zahnriemen
- 22: Flyer
- 23: Umlaufbahn
- 24: Klemmeinheit
- 25: Endanschlussstück

## Patentansprüche

1. Vorrichtung (1) zum Herstellen von Spulen bzw. Spulengruppen für Elektromotoren, Generatoren oder dergleichen, insbesondere zum Wickeln von Spulen (2) vor dem Einziehen in ein genutetes Statorpaket, **dadurch gekennzeichnet, dass** eine Klemmeinheit (4) mit einem drehbaren Wickelkopf (7) zum Aufrollen eines Anschlussstücks (17, 25) einer Spule (2) vorgesehen ist.

2. Vorrichtung nach einem der vorgenannten Ansprüche, **dadurch gekennzeichnet, dass** die Klemmeinheit (4) so einstellbar ist, dass ein Spulendraht (10) gleitend geführt und/oder haltend festgeklemmt ist.

3. Vorrichtung nach einem der vorgenannten Ansprüche, **dadurch gekennzeichnet, dass** die Klemmeinheit (4) mit Wickelkopf (7) in wenigstens einer Richtung verfahrbar ist.

4. Vorrichtung nach einem der vorgenannten Ansprüche, **dadurch gekennzeichnet, dass** eine zweite Klemmeinheit (24) zum Halten des Spulendrahts (10) vorgesehen ist.

5. Vorrichtung nach einem der vorgenannten Ansprüche, **dadurch gekennzeichnet, dass** eine Schneideinheit (11, 16) in eine der beiden Klemmeinheiten (4, 24) integriert ist.

6. Verfahren zum Herstellen von Spulen bzw. Spulengruppen für Elektromotoren, Generatoren oder dergleichen, insbesondere zum Wickeln von Spulen (2) vor dem Einziehen in ein genutetes Statorpaket, **dadurch gekennzeichnet, dass** eine Vorrichtung nach einem der vorgenannten Ansprüche verwendet wird.

7. Stator für einen Elektromotor, Generator oder dergleichen, **dadurch gekennzeichnet, dass** er mit einer Vorrichtung oder nach einem Verfahren nach einem der vorgenannten Ansprüche gefertigte Spulen bzw. Spulengruppen (2) aufweist.

## Claims

1. A device (1) for manufacturing coils or groups of coils for electric motors, generators or the like, in particular for winding coils (2) before pulling into a slotted stator lamination,
**characterised in that** a clamping unit (4) is provided with a rotatable winding head (7) for reeling a connecting branch (17, 25) of a coil (2).

2. A device according to one of the above-mentioned Claims,
**characterised in that** the clamping unit (4) can be adjusted so that a coil wire (10) is slidably guided and/or is clamped fast for holding.

3. A device according to one of the above-mentioned Claims,
**characterised in that** the clamping unit (4) with winding head (7) can be moved in at least one direction.

4. A device according to one of the above-mentioned Claims,
**characterised in that** a second clamping unit (24) is provided to hold the coil wire (10).

5. A device according to one of the above-mentioned Claims,
**characterised in that** a cutting unit (11, 16) is integrated into one of the two clamping units (4, 24).

6. A method for the manufacture of coils or groups of coils for electric motors, generators or the like, in particular for winding coils (2) before being pulled into a slotted stator lamination,
**characterised in that** a device in accordance with one of the above-mentioned Claims is used.

7. A stator for an electric motor, generator or the like,
**characterised in that** it comprises coils or groups of coils (2) produced with a device or by a method in accordance with one of the above-mentioned Claims.

## Revendications

1. Dispositif (1) destiné à fabriquer des bobines ou groupes de bobines pour moteurs électriques, générateurs ou analogues, en particulier pour enrouler des bobines (2) avant l'insertion dans un corps de stator à encoches,
**caractérisé en ce qu'**il est prévu une unité de serrage (4) comportant une tête de bobine (7) orientable pour enrouler un raccord (17, 25) d'une bobine (2).

2. Dispositif selon la revendication 1,
**caractérisé en ce que** l'unité de serrage (4) est réglable de telle sorte qu'un fil de bobine (10) soit guidé de façon coulissante et/ou serré de façon maintenue.

3. Dispositif selon l'une des revendications précédentes,
**caractérisé en ce que** l'unité de serrage (4) comportant une tête de bobine (7) peut être déplacée au moins dans une direction.

4. Dispositif selon l'une des revendications précédentes,
**caractérisé en ce qu'**une deuxième unité de serrage (24) est prévue pour maintenir le fil de bobine (10).

5. Dispositif selon l'une des revendications précédentes,
**caractérisé en ce qu'**une unité de coupe (11, 16) est intégrée dans l'une des deux unités de serrage (4, 24).

6. Procédé de fabrication de bobines ou groupes de bobines pour moteurs électriques, générateurs ou analogues, en particulier pour enrouler des bobines (2) avant l'insertion dans un corps de stator à encoches,
**caractérisé en ce qu'**il met en oeuvre un dispositif conformément à l'une des revendications précédentes.

7. Stator pour un moteur électrique, générateur ou analogue,
**caractérisé en ce qu'**il présente des bobines ou groupes de bobines (2) fabriqués par un dispositif ou selon un procédé conformément à l'une des revendications précédentes.
